# EUROPÄISCHE PATENTANMELDUNG

(11) **EP 2 993 081 A2**
(43) Veröffentlichungstag der Anmeldung: **09.03.2016**
(21) Anmeldenummer: 15000228.5
(22) Anmeldetag: 27.01.2015
(51) Int. Cl.: B60P 3/42

(54) **TRANSPORTFAHRZEUG**

(30) Priorität: 03.09.2014 DE 102014012856
(71) Anmelder: Exeler, Andreas, 48432 Rheine (DE)
(72) Erfinder: Exeler, Andreas, 48432 Rheine (DE)
(74) Vertreter: Busse, Harald F.W.

(57) **Zusammenfassung**

Ein Transportfahrzeug (1) mit zumindest einem Laderaum (2) zur Aufnahme von trockenen Gütern, insbesondere Massengütern wie Getreide oder anderen landwirtschaftlichen Produkten, wird so ausgebildet, daß dem Laderaum (2) zumindest ein flexibles, größenvariables Behältnis (8) zugeordnet ist, das über zumindest einen außerhalb des Laderaums liegenden Befüll- und Entleeranschluß 12 mit einem Flüssigkeit enthaltenden Stoff befüllbar und/oder entleerbar ist.

## Beschreibung

Die Erfindung betrifft ein Transportfahrzeug mit zumindest einem Laderaum zur Aufnahme von Massengütern, insbesondere von Getreide oder anderen landwirtschaftlichen Produkten, nach dem Oberbegriff des Anspruchs 1.

Es ist bekannt, zum Beispiel im Laderaum eines LKW, eines Sattelaufliegers oder eines Anhängers oder auch im Laderaum eines Schiffes Schüttgüter wie etwa Getreide zu transportieren. Insbesondere wenn es sich um Lebensmittel, Tierfutter oder Grundstoffe für diese handelt, sind dabei hohe Anforderungen an die Sauberkeit zu stellen.

Dies führt dazu, daß nach einer Anlieferung von derartigen Schüttgütern die Rückfahrt häufig als Leerfahrt stattfindet, weil andere Stoffe, etwa Flüssigkeiten, nicht im Laderaum transportiert werden können oder dürfen.

Dabei wäre es häufig wünschenswert, derartig unterschiedliche Stoffe transportieren zu können, ohne eine erhöhten Reinigungsaufwand des Laderaums und der Kleidung des Fahrers dafür in Kauf nehmen zu müssen.

So könnte beispielsweise auf einer Hinfahrt Gülle vom Viehzüchter zu überwiegend Ackerbau betreibenden Betrieben gebracht werden und auf der Rückfahrt dafür Viehfutter geladen werden. Oder es könnte Brauereigerste an Brauereien geliefert und dafür im Austausch Stärkewasser rücktransportiert werden. Auch viele andere Stoffpaarungen sind denkbar.

Würde man hierfür einen flexiblen Flüssigkeitstank in den Laderaum einlegen, ergäbe sich allerdings das Problem, daß bei dessen Befüllung der Laderaum verschmutzt, so daß der Reinigungsaufwand für eine nachfolgende Schüttgutnutzung sehr hoch wäre.

Der Erfindung liegt das Problem zugrunde, eine kombinierte Nutzungsmöglichkeit von Laderäumen zu verbessern.

Die Erfindung löst dieses Problem durch ein Transportfahrzeug mit den Merkmalen des Anspruchs 1. Zu weiteren vorteilhaften Ausgestaltungen und Merkmalen der Erfindung wird auf die Ansprüche 2 bis 18 verwiesen.

Dadurch, daß dem Laderaum zumindest ein flexibles, größenvariables Behältnis zugeordnet ist, das über zumindest einen außerhalb des Laderaums liegenden Befüll- und Entleeranschluß befüllbar- und entleerbar ist, müssen Anschlußschläuche, Pumpen oder ähnliche Einrichtungen zum Befüllen und/oder Entleeren nicht über die Bordwand des Laderaums nach oben gehievt werden, so daß die Verschmutzungsgefahr für den Fahrer, der in der Regel auch ein Beladen mit oder zumindest mit unterstützend vornimmt, deutlich verringert ist. Insbesondere können die Einrichtungen zum Befüllen und/oder Entleeren auch nicht in den Laderaum tropfen, so daß dort keine Verschmutzungsgefahr mehr resultiert. Das flexible Behältnis kann daher von außen befüllt oder entleert werden, ohne die Sauberkeit des Laderaums in irgendeiner Weise zu gefährden. Dies macht es möglich, auch Lebensmittel oder deren Grundstoffe im Austausch mit beispielsweise Gülle oder anderen pumpfähigen Stoffen zu transportieren, ohne den Laderaum reinigen zu müssen. Dadurch läßt sich die Anzahl von Leerfahrten in enormem Ausmaß reduzieren.

Insbesondere ist das größenvariable Behältnis nach Art eines Sacks und zur Aufnahme von Flüssigkeiten oder nahezu flüssigen Füllungen, wie etwa Gülle, ausgebildet. Hierzu kommt beispielsweise für die Außenhülle ein elastisch verformbarer und flüssigkeitsdichter Kunststoff nach Art einer LKW-Plane in Betracht.

Wenn besonders vorteilhaft der Befüll- und Entleeranschluß unterhalb des Laderaums gelegen ist, ist auch die Verschmutzungsgefahr für den Fahrer oder anderes Bedienpersonal minimiert, da die Anschlußschläuche nicht mehr nach oben gewuchtet werden müssen. Insbesondere bei einem LKW kann daher der zumindest eine Anschluß zum Be- und/oder Entleeren unterhalb des Laderaums an dessen Außenwandung angeordnet und kann beispielsweise bei einem Muldenkipper auch mit der Kippbrücke hochgeschwenkt werden. Den Anschlüssen kann eine Pumpe zugeordnet sein, die ebenfalls mitbeweglich ist, so daß auch hier beim Schwenken keine Trennung im Pumpenbereich stattfindet und damit eine Verschmutzung ausgeschlossen ist. Eine Rohrleitung führt dann von dort direkt in einen Anschluß des flexiblen Behältnisses, so daß auch auf diesem Weg ein Austritt von Befüllgut ausgeschlossen ist. Die Nutzung einer externen Pumpe ist alternativ natürlich möglich.

Auch bei einem Güterwaggon ist eine solche unterhalb des Laderaums gelegene Anordnung möglich. Bei einem Schiff hingegen müßte der Anschluß zum Be- und/oder Entleeren auf einer hinreichend breiten und mit nach außen führenden Abläufen versehenen Brücke oberhalb der Laderäume liegen, so daß dort eventuell austretende Flüssigkeit in jedem Fall von dieser Brücke nicht in den Laderaum gelangen kann.

Besonders günstig weist bei einem LKW das größenvariable Behältnis ein Befüllvolumen von mehr als zwanzig Kubikmetern auf, beispielsweise von 27 Kubikmetern, so daß ein großer Teil des Laderaums von diesem Behältnis eingenommen werden kann, um eine möglichst gute Raumausnutzung zu gewährleisten.

Sofern das größenvariable Behältnis in einem eigenen, größenvariablen Abteil im Laderaum angeordnet ist, stört das entleerte Behältnis den Laderaum nur minimal und kann zudem noch gegenüber diesem abgedichtet sein, beispielsweise indem das Abteil von einer längs zum Laderaum beweglichen Schottwand begrenzt ist. Diese Schottwand kann über außen liegende Lippendichtungen oder ähnliches gegenüber den Wandungen des Laderaums abgedichtet sein. Auch eine Teilbefüllung des Laderaums mit Schüttgut und eine Teilbefüllung des flexiblen Behältnisses mit Flüssigkeit ist dann gleichzeitig möglich. Die Schottwand nimmt dann eine Zwischenstellung ein. Insbesondere kann auch die Schottwand mit einer Rolleinrichtung für das Auf- und Abrollen des flexiblen Behältnisses verbunden sein und benötigt dann für ihre Bewegung keinen eigenen Antrieb. Vorteilhaft ist das Abteil für das flexible Behältnis in entleerter Stellung des Behältnisses von einer beweglichen Deckeleinrichtung abdeckbar ist, so daß dieses Abteil beim Einfüllen von Massengut durch die Deckeleinrichtung und die Schottwand vor Körnern, Staub oder ähnlichem geschützt ist.

Ebenfalls ist es günstig, wenn das Fahrzeug im Laderaum einen Walking floor umfaßt, mit dem auch die Schottwand verbunden und darüber mitbeweglich ist.

Um zu verhindern, daß die Schottwand im entleerten Zustand des flexiblen Behältnisses noch von diesem in eine Bewegung aufdrückbar ist, kann eine gesicherte, starre Stellung dieser Schottwand erreicht werden. Insbesondere sind hierzu von oben lösbare und sichtbare Verriegelungsmittel vorgesehen, die beispielsweise federbelastet in Ausnehmungen im Bodenbereich des Laderaums drückbar sind und durch Seilzüge nach oben herausgezogen werden können. Eine Sichtkontrolle ist hierbei möglich.

Sehr günstig ist das flexible Behältnis an einer dem oberen Bereich des Laderaums zugeordneten und längs zum Laderaum beweglichen Rolleinrichtung gehalten, zum Beispiel über eine oberseitige Schürze, die dem flexiblen Behältnis zugeordnet ist. Mit dieser Rolleinrichtung kann das sackartige, flexible Behältnis auf einer Trommel auf- oder von dieser abgerollt werden und dadurch im entleerten Zustand aufgerollt sein und ein besonders kleines Volumen benötigen. Ein Laderaum von zum Beispiel typisch 48 Kubikmetern würde in diesem Zustand nur um etwa 5 Kubikmeter verkleinert.

Hierzu trägt insbesondere auch bei, wenn das flexible Behältnis beim Aufrollen nach Art einer Tube ausdrückbar ist, was besonders vorteilhaft dadurch möglich ist, daß die Rolleinrichtung auf einem dem oberen Bereich des Laderaums zugeordneten Schienensystem verlagerbar ist und bei seiner Verlagerung die Schottwand mitbewegt.

Bei der Befüllung des flexiblen Behältnisses kann die Trommel mit der Schottwand allein durch die Volumenvergrößerung des Behältnisses bewegt werden. Beim Entleeren ist eine aktive Bewegung der Trommel durch einen motorischen Antrieb möglich, um die Vorwärtsbewegung der begrenzenden Schottwand bei gleichzeitigem Aufrollen des flexiblen Behältnisses zu erreichen. Eine eigene Energieversorgung für die Trommel ist dabei entbehrlich, wenn dieser ein insbesondere innenliegender Hydraulikmotor zugeordnet ist, der über die Bordhydraulik gespeist werden kann. Die Zuleitungen für die Hydraulik können dabei über eine Aufrollvorrichtung, die mit der Trommel mitbeweglich ist, auf- und abrollbar sein.

Sofern der Laderaum eine schwenkbare Kippmulde bildet und das flexible Behältnis sowie der außenliegende Anschluß zum Befüllen und Entleeren und eine zugehörige Pumpeinrichtung mit der Kippmulde schwenkbar ist, ist in jeder Bewegungsphase eine Verschmutzungsgefahr des Innenbereichs des Laderaums verhindert. Die Breite des Fahrzeugs muß durch die erfindungsgemäße Ausbildung nicht steigen.

Insbesondere ist das größenvariable Behältnis mitsamt seiner Rolleinrichtung und dem Befüll- und Entleeranschluß an einem Standardtransportfahrzeug, beispielsweise einem Kipper, nachrüstbar und kann auch wieder von diesem entfernt werden. Die Einsatzmöglichkeiten von Standardfahrzeugen werden damit signifikant erhöht. Durch die Vermeidung von Leerfahrten rechnet sich eine Nachrüstung schon nach sehr kurzer Zeit.

Eine besonders hohe Flexibilität und Verbesserung der Nutzungsmöglichkeiten ergibt sich, wenn das größenvariable Behältnis im entleerten Zustand mitsamt seiner Rolleinrichtung und dem Befüll- und Entleeranschluß in einer heckseitigen Schwenkklappe eines Kippers angeordnet ist. Der eigentliche Laderaum bleibt dann ohne jede Größeneinschränkung erhalten, zudem kann eine Austausch einer derartigen, die genannten Baueinheiten umfassenden Schwenkklappe gegen eine herkömmliche Schwenkklappe leicht möglich sein. Auch ein Befüllanschluß mit oder ohne eigene Pumpe kann an der Schwenkklappe mit vorgesehen sein. Ein oberes Schienensystem für die Vorwärtsbewegung der Rolleinrichtung kann innen an der Schwenkklappe vorgesehen sein und über eine kurze Unterbrechung in ein Schienensystem des davor befindlichen Laderaums überführen.

Weiterhin ist es günstig, im oberen Bereich des Abteils zumindest ein Ausgleichsbehältnis mit einem Entlüftungsanschluß anzuordnen, das in der Endphase der Befüllung des Behältnisses volläuft. Damit ist vermieden, daß im oberen Bereich des flexiblen Behältnisses Luft verbleibt, die zu einem Schwappen der Flüssigkeit und einem instabilen Fahrverhalten führen könnte. Eine einfache Sichtkontrolle des Ausgleichsbehältnisses ist möglich. Dieses kann zum Beispiel auch mit einer Füllstandsanzeige oder einem Klarsichtschlauch zum Entlüftungsanschluß versehen sein.

Des weiteren ist es möglich, daß zwei Öffnungen im Boden des Laderaums und des flexiblen Behältnisses vorgesehen sind, so daß ein Flüssigkeitsumlauf zur Vermeidung von Verstopfungen möglich ist. Je nach Beschaltung der Pumpe kann die Fließrichtung zwischen den Öffnungen gewählt werden. Jede Öffnung kann zudem einzeln verschließbar sein. Eine Verbindung ist beispielsweise über eine in Draufsicht U-förmige Rohrverbindung möglich.

Insbesondere bei dieser, aber auch bei einer Anordnung mit einer bodenseitigen Öffnung, kann auch außenseitig an jeder Fahrzeugseite je ein Anschluß für einen Schlauch zur Befüllung oder Entleerung vorgesehen sein. Dies verbessert die Flexibilität, da der Schlauch dann an jeder Fahrzeugquerseite ohne ein Umrangieren des Fahrzeugs angeschlossen werden kann.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:
- Fig. 1: eine schematische Seitenansicht eines beispielhaften Transportfahrzeugs, hier eines Sattelschleppers mit einem Laderaum in einem Sattelauflieger, wobei in dem Laderaum ein flexibles Behältnis mit enthalten und hier in seinem entleerten Zustand dargestellt ist,
- Fig. 2: den Sattelauflieger nach Figur 1 in schematischer Seitenansicht,
- Fig. 3: den Sattelauflieger nach Figur 2 während der Befüllung des flexiblen Behältnisses,
- Fig. 4: den Sattelauflieger nach Figur 3 bei voller Befüllung des flexiblen Behältnisses,
- Fig. 5: den Sattelauflieger nach Figur 4 während der Entleerung und des gleichzeitigen Aufrollens des flexiblen Behältnisses.
- Fig. 6: den Sattelauflieger in perspektivischer Ansicht von schräg vorne bei entleertem flexiblem Behältnis und einer teilweise geöffneten Deckelanordnung,
- Fig. 7: einen Sattelauflieger in schematischer Seitenansicht mit einer hinteren Schwenkklappe, die das größenvariable Behältnis im entleerten Zustand mitsamt seiner Rolleinrichtung und dem Befüll- und Entleeranschluß umfaßt, hier im entleerten und aufgerollten Zustand des flexiblen Behältnisses dargestellt,
- Fig. 8: eine ähnliche Ansicht wie Figur 7, jedoch bei teilweise befülltem Behältnis,
- Fig. 9: eine ähnliche Ansicht wie Figur 8, jedoch bei nahezu vollständig befülltem Behältnis.
- Fig. 10: eine Ansicht des Sattelaufliegers nach Figur 6 von vorne in einer Version mit zwei unterseitigen Anschlüssen und einem darunter befindlichen Rohrsystem zum Ermöglichen eines Spülens des flexiblen Behältnisses,
- Fig. 11: den Laderaum nach Figur 11 in schematischer Darstellung von unten mit einem U-förmigen Rohr und zwei seitlichen Anschlüssen sowie mit einer Pumpeinrichtung im Querrohr.

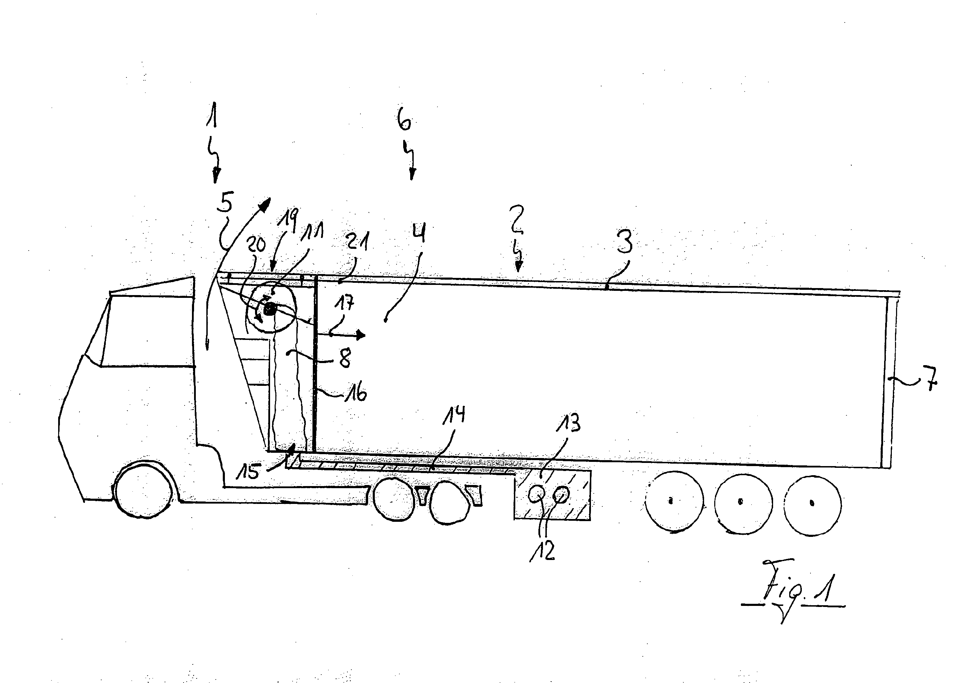

Das in Figur 1 nur beispielhaft dargestellte und insgesamt mit 1 bezeichnete Transportfahrzeug ist hier als selbstfahrendes Straßenfahrzeug ausgebildet. Auch ein gezogenes Straßenfahrzeug oder ein Schienen- oder Wasserfahrzeug kann erfindungsgemäß ausgebildet sein.

Das hier gezeichnete Transportfahrzeug 1 umfaßt einen nach oben offenen und nach unten sowie zu den Seiten von Wandungen 3 umgrenzten Laderaum 2, hier als Bestandteil einer in Richtung des Pfeils 5 anhebbaren Kippmulde 4, die Teil eines Sattelaufliegers 6 ist. Die Rückwand bildet daher eine oben schwenkbar gehaltene Schwenkklappe 7, 22 aus. Ein solcher Laderaum 2 bildet ohne weitere Maßnahmen einen Aufnahmeraum für trockene Güter wie etwa Schüttgüter oder auch Paletten oder andere Stückgüter, aus. In der Landwirtschaft wird mit einem Kipper 4, wie gezeichnet, beispielsweise häufig Getreide transportiert. Dabei sind verschiedenste Kastenmulden für eine erfindungsgemäße Ausbildung nutzbar, beispielsweise auch mit Schubböden versehene.

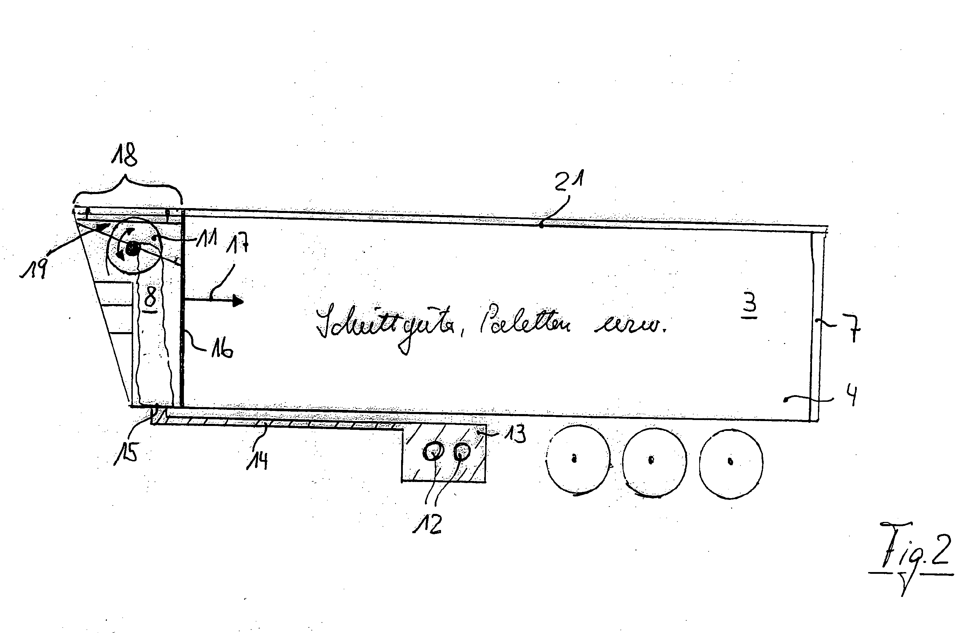

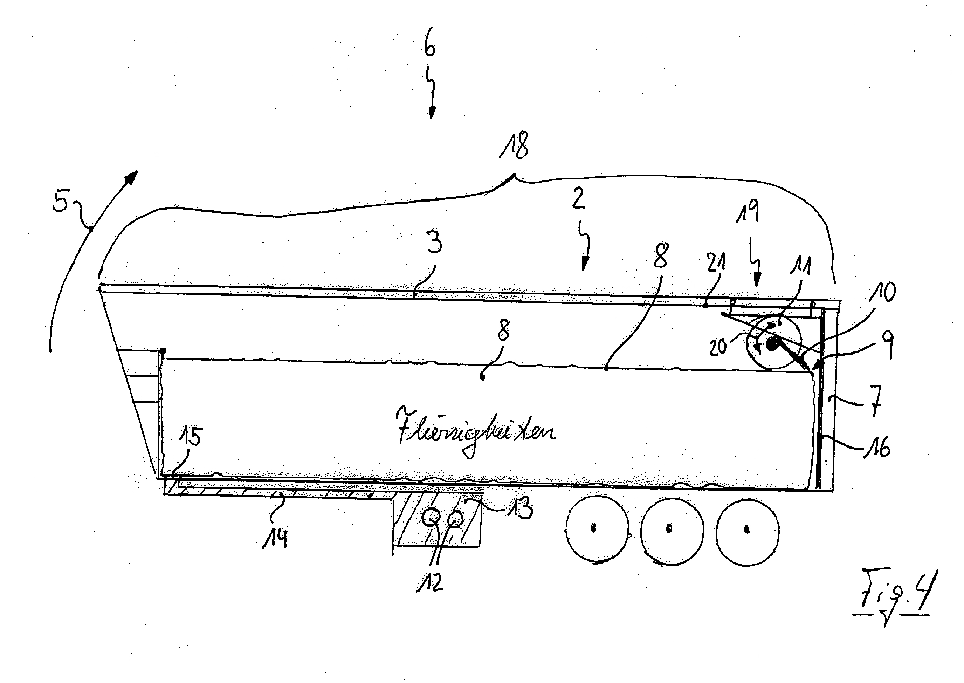

Der Laderaum 2 bildet hier jedoch nicht nur den offenen Raum aus, sondern ihm ist zusätzlich zumindest ein flexibles, größenvariables Behältnis 8 zugeordnet. Dieses weist eine flexible, flüssigkeitsdichte Außenhülle, beispielsweise aus einem Material nach Art einer LKW-Plane, auf und ist größenvariabel zwischen einer Minimalgröße gemäß Figur 2 und einer maximal befüllten Größe gemäß Figur 4. Das Behältnis 8 ist dabei zur Aufnahme von Flüssigkeiten oder von nahezu flüssigen Füllungen, wie etwa Gülle, ausgebildet und kann im befüllten Zustand (Figur 4) ungefähr die Querschnittskontur des Laderaums 2 annehmen, also zum Beispiel eine - von hinten gesehen - rechteckige Umrißgestalt ausbilden. An seinem dann hinteren und oberen Rand 9 ist eine Schürze 10 vorgesehen, mit der das sackartige Behältnis 8 an einer längs zum Laderaum 2 und oberhalb des Behältnisses 8 verlagerbaren Trommel 11 gehalten ist.

Das Behältnis 8 ist über zumindest einen außerhalb des Laderaums 2 liegenden Befüll- und Entleeranschluß 12 mit einem Flüssigkeit enthaltenden Stoff befüllbar und entleerbar. Weder bei der Befüllung noch bei der Entleerung des flexiblen Behältnisses 8 kann daher ein Teil des darin transportierten flüssigen Stoffes in den Laderaum 2 tropfen und diesen verschmutzen.

Insbesondere ist zumindest bei Straßen- und Schienenfahrzeugen 1 der Befüll- und Entleeranschluß unterhalb des Laderaums 2 gelegen, wie hier auch gezeichnet ist. Dann muß auch der Fahrer oder eine andere Person, die für die Befüllung oder Entleerung zuständig ist, nicht die Anschlußschläuche oder andere hierfür relevante Teile nach oben wuchten - mit der Gefahr, nicht nur das Fahrzeug 1, sondern auch sich selbst dabei zu beschmutzen. Insbesondere beim Gülletransport oder bei sonstigem Flüssigdünger entfällt daher die Notwendigkeit für den Fahrer, sich nach jedem Befüll- oder Entleervorgang des Tanks 8 umziehen zu müssen, so daß eine erhebliche Erleichterung erreicht ist.

Hier sind beispielhaft zwei Anschlüsse 12 eingezeichnet. Auch ein einzelner Anschluß 12 kann genügen, der dann über eine mit diesem unter dem Laderaum 2 hängende Pumpeinrichtung 13 (oder eine externe Pumpeinrichtung) und ein Leitungsrohr 14 (zum Beispiel ein Rundrohr mit 150 Millimetern Durchmesser) zu einem gedichteten und in das flexible Behältnis 8 mündenden Anschlußflansch 15 im Boden der Kippmulde 4 führt. Auch andere Leitungsformen sind möglich, zum Beispiel ein flaches Rechteckrohr mit einer Höhe von nur 100 Millimetern, jedoch einer Breitenerstreckung von 200 Millimetern. Die Pumpeinrichtung 13 kann etwa bei einem LKW oder einem landwirtschaftlichen Gerät wie einem Traktor von der Bordhydraulik gespeist werden und so auch bei großer Last laufen.

Bei der Befüllung kann das Volumen des Behältnisses 8 zunehmen und dabei eine Schottwand 16 in Richtung des Pfeils 17 nach hinten drücken, so daß sich der freie Laderaum verkleinert und der von dem flüssigkeitsenthaltenden Stoff benötigte Raum für das Behältnis 8 sich vergrößert.

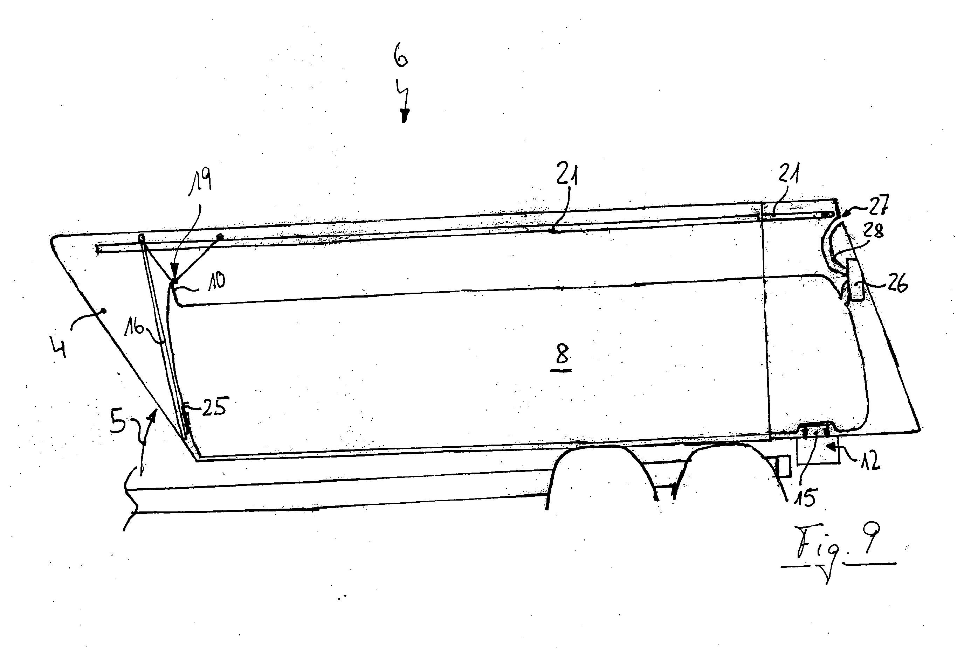

Bei voller Befüllung des flexiblen Behältnisses 8 kann dies bei einem üblichen Kipper 4 mit einem Volumen von zum Beispiel 28 Kubikmetern ein Befüllvolumen von mehr als zwanzig Kubikmetern einnehmen, hier beispielsweise von 27 Kubikmetern (Figur 4 bzw. Figur 9).

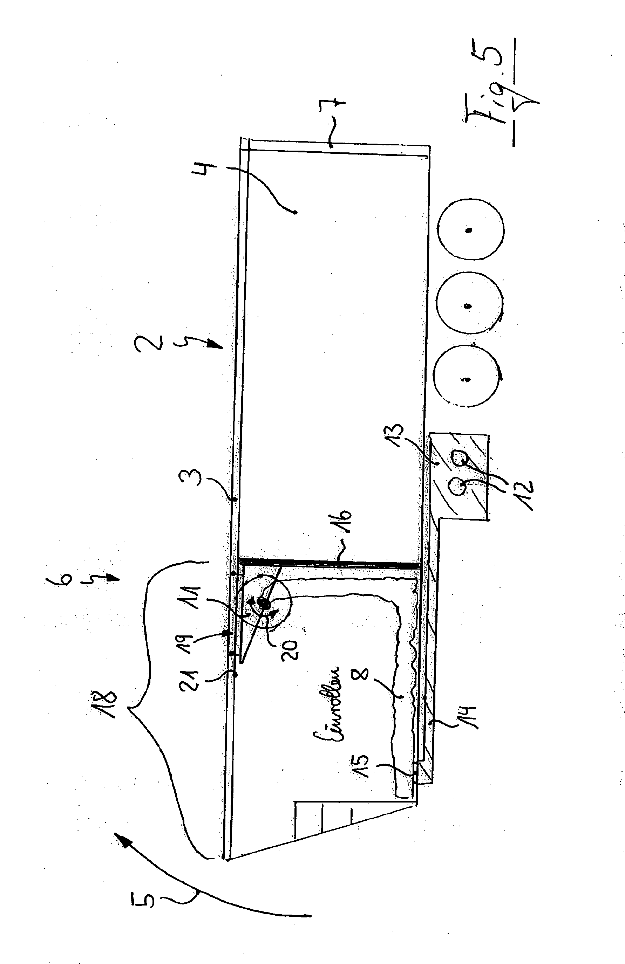

Wie bereits angedeutet, ist das größenvariable Behältnis 8 in einem eigenen, größenvariablen Abteil 18 im Laderaum angeordnet ist. Dieses ist in Figur 2 in einer ersten Version in seiner minimierten Ausdehnung am hier vorderen Rand des Laderaums 2 gezeigt, in der es zum Beispiel nur etwa fünf Kubikmeter des Laderaums einnimmt. In Figur 4 hingegen ist die gesamte Länge des Laderaums von dem Abteil 18 eingenommen. Jede Zwischenstellung ist, wie in Figur 5 angedeutet, möglich, und zwar nicht nur während des Befüllens, sondern auch als stabile Fahrstellung. Es ist daher nicht erforderlich, daß das Behältnis 8 während einer Fahrt vollständig befüllt (Figur 4) oder vollständig entleert (Figur 2) ist. Das Fahrzeug 1 kann daher nicht nur mit entweder Flüssigkeit enthaltendem Stoff oder Trockengut befüllt werden, sondern auch eine Kombination ist möglich.

Ebenso ist es auch möglich (nicht gezeichnet), daß mehrere solcher Abteile 18 mit jeweils einem flexiblen Behältnis 8 hintereinander angeordnet sind, etwa wenn mehrere verschiedene Flüssigkeiten transportiert werden sollen. Im befüllten Zustand würden derartige Behältnisse dann jeweils nur einen Teil der Laderaumlänge einnehmen.

Das oder jedes Abteil 18 ist von einer längs zum Laderaum 2 beweglichen Schottwand 16 begrenzt, wobei eine randseitig der Schottwand 16 befindliche Dichtung, zum Beispiel eine Lippendichtung, gegenüber den Wandungen 3 des Laderaums vorgesehen sein kann. Dadurch bleibt das Abteil 18 frei von zum Beispiel Getreidestaub oder ähnlichem. Hierzu kann auch noch eine unten noch näher beschriebene Deckeleinrichtung 23 beitragen.

Über die o. g. Schürze 10 und die Trommel 11 ist das flexible Behältnis 8 an einer dem oberen Bereich des Laderaums 2 zugeordneten und längs zum Laderaum 2 beweglichen Rolleinrichtung 19 gehalten. Diese umfaßt die in Richtung des Pfeils 20 drehbare Trommel 11 und ist an einem dem oberen Bereich des Laderaums 2 zugeordneten Schienensystem 21 längsverschieblich gehalten. Die Rolleinrichtung 19 kann auch eine Auf- und Abrolleinrichtung für Hydraulikschläuche enthalten.

Durch die Kombination der Drehbarkeit der Trommel 11 mit ihrer Längsverlagerbarkeit ist das über die Schürze 10 mit der Trommel 11 verbundene Behältnis 8 auf der Trommel 11 aufrollbar bis zur Endstellung nach Figur 2 bzw. von dieser abrollbar bis zur Endstellung nach Figur 4. Die Hydraulikleitungen können dabei entsprechend mitgeführt werden.

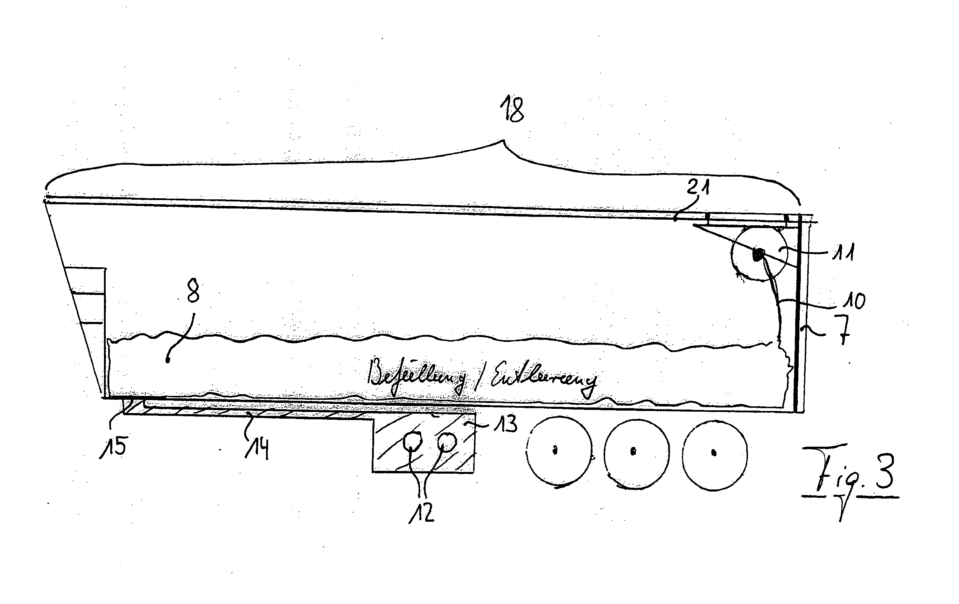

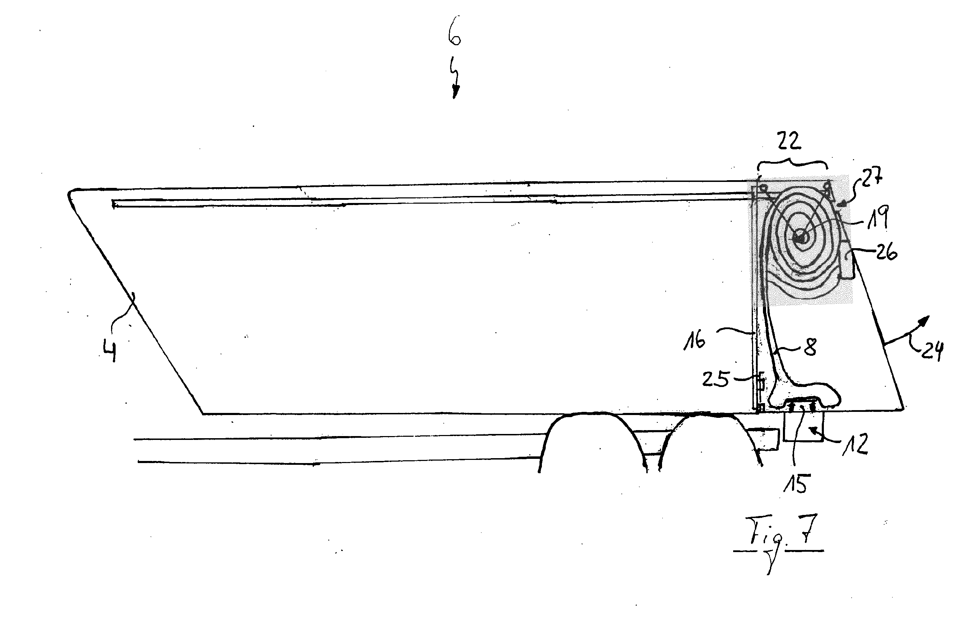

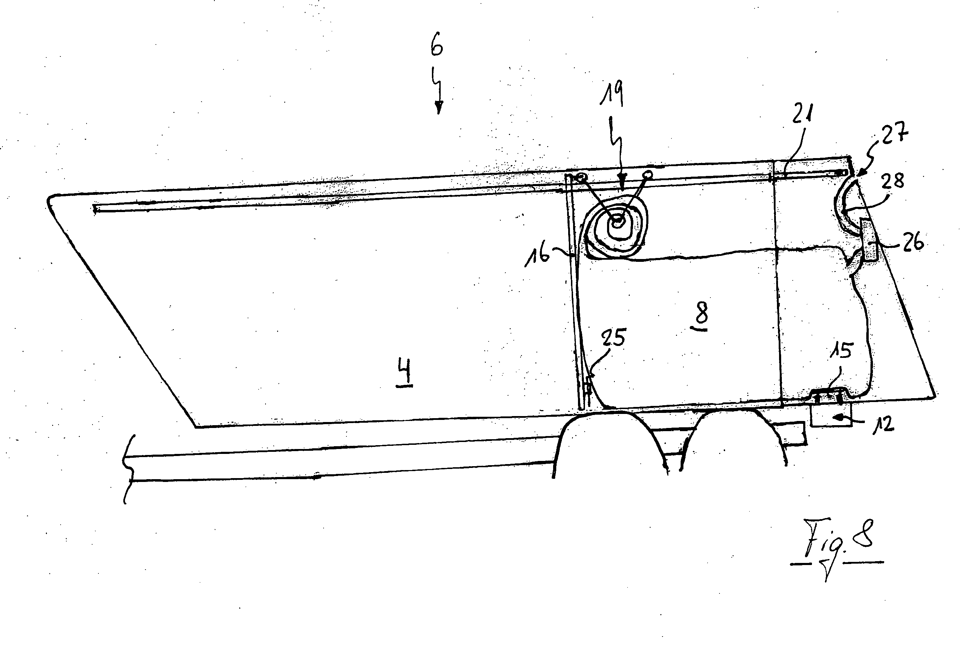

Dabei kann das Befüllen des Behältnisses 8 allein durch dessen dabei erfolgende Ausdehnung die Rolleinrichtung 19 in Richtung des Pfeils 18 nach hinten (bzw. gemäß den Figuren 7 bis 9 nach vorne) bewegen. Alternativ kann auch zunächst die Rolleinrichtung 19 nach hinten bewegt und dann das Behältnis 8 befüllt werden, wie dies hier in Figur 3 angedeutet ist.

Für die nicht vom Behältnis 8 bewirkte Längsverlagerung der Rolleinrichtung 19 ist der Trommel 11 ein motorischer Antrieb, insbesondere ein innenliegender Hydraulikmotor, zugeordnet, der von der Fahrzeughydraulik gespeist sein kann. Das Drehen der Trommel 11 bewirkt dann gleichzeitig die Längsverlagerung der Rolleinrichtung 19 über das längs und horizontal laufende Schienensystem 21. Bei Drehung der Trommel im Uhrzeigersinn bewegt sich die Rolleinrichtung 19 nach hinten, das Behältnis 8 wird dabei gleichzeitig abgerollt (Übergang von Figur 2 zu Figur 4), bei Drehung der Trommel 11 gegen den Uhrzeigersinn bewegt sich die Rolleinrichtung 19 nach vorne, das Behältnis 8 wird dabei gleichzeitig aufgerollt (Übergang von Figur 4 zu Figur 5).

Insbesondere kann bei diesem Aufrollen das flexible Behältnis 8 nach Art einer Tube ausgedrückt werden, was die Entleerung besonders gründlich macht, so daß ein enges Packmaß mit einer Minimierung des Abteils 18 resultiert und ein maximaler Laderaum für trockenes Gut dann verbleibt. Die Rolleinrichtung 19 ist mit der Schottwand 16 fest verbunden und bewegt diese bei ihrer Verlagerung mit. Das bedeutet, daß für den Wechsel zwischen flüssiger und fester/trockener Ladung oder auch für jede Kombination keinerlei Umbauten am Fahrzeug 1 erforderlich sind, was die Handhabung erheblich erleichtert und jede Befüllung und Entleerung sehr schnell ermöglicht.

Wenn der Laderaum 2, wie hier angedeutet, eine schwenkbare Kippmulde 4 bildet, sind das flexible Behältnis 8 sowie der außen liegende Anschluß 12 zum Befüllen und Entleeren und eine zugehörige Pumpeinrichtung 13 mit der Kippmulde 4 schwenkbar. Auch hier sind dann eine Relativbewegung der Teile zueinander und eine Trennung nicht erforderlich, so daß eine Verschmutzungsgefahr vermieden ist. Trotz der außen angeordneten Lage ist dann eine kompakte Einheit geschaffen.

In Figur 5 ist eingezeichnet, daß das das Abteil 18 in entleerter und hier aufgerollter Stellung des aufgenommenen Behältnisses 8 von einer beweglichen Deckeleinrichtung 23 abdeckbar ist, um bei einer Befüllung mit Massengütern den Bereich des aufgerollten Behältnisses 8 und seiner Mechanik geschützt halten zu können. Hier ist ein Deckelteil 24 zu Inspektionszwecken geöffnet.

Weiter kann das Fahrzeug 1 auch einen Walking floor umfassen, mit dem auch die Schottwand 16 verbunden sein kann. Diese ist dann nicht nur über die im oberen Bereich seitlich angeordneten Schienen 21 gehalten, sondern kann mit ihrer unteren Kante über den Walking floor geführt sein.

In einer weiteren Version (Figuren 7 bis 9) ist dargestellt, daß alternativ das größenvariable Behältnis 8 im entleerten Zustand mitsamt seiner Rolleinrichtung 19 und dem Befüll- und Entleeranschluß 12 in einer heckseitigen Schwenkklappe 22 eines Kippers 4 angeordnet sein kann. Auch hier kann die Rolleinrichtung 19 direkt mit der Schottwand 16 verbunden sein und diese dadurch zwangsweise mitbewegen.

Diese Schwenkklappe 22 mit den genannten Baueinheiten kann insbesondere gegen eine herkömmliche Schwenkklappe 7 austauschbar sein, so daß auch je nach Bedarf die eine oder andere angesetzt werden kann. Die mit dem aufgerollten Behältnis 8 versehene Schwenkklappe 22 kann in Fahrzeuglängsrichtung eine Erstreckung von zum Beispiel ungefähr einem Meter aufweisen und dennoch bei entleertem Behältnis 8 (Figur 7) ebenfalls eine Schwenkbarkeit in Richtung des Pfeils 24 aufweisen.

Um zu verhindern, daß die das hier heckseitig gelegene Abteil 18 von dem aufgerollten Behältnis 8 ungewollt aufgedrückt wird, kann die das Abteil 18 hier nach vorne begrenzende Schottwand 16 über in ihrer das Abteil 18 mit dem entleerten flexiblen Behältnis 8 schließenden Stellung über von oben lösbare Verriegelungsmittel 25 sicherbar sein. Beispielsweise sind als Verriegelungsmittel nach unten federbelastete Stifte vorgesehen, die in entsprechende Ausnehmungen im Bodenbereich der Schwenkklappe 22 eingreifen können. Ein Lösen der Verriegelungsmittel 25 kann konstruktiv einfach unter Sichtkontakt von oben in den Laderaum erfolgen, etwa über manuell zu betätigende Seilzüge. Eine erhöhte Plattform für den Benutzer kann hierfür am Kipper 4 vorgesehen sein.

Bei einer solchen Ausbildung ist es hilfreich, auch eine Pumpeinrichtung 13 von oben betätigen zu können. Der Benutzer kann dabei optimalerweise aus dieser Stellung heraus auch das Befüllen des Behältnisses 8 und dessen Füllstand optisch kontrollieren.

Um dies zu ermöglichen, kann im oberen Bereich des Abteils 18 zumindest ein Ausgleichsbehältnis 26 mit einem Entlüftungsanschluß 27 angeordnet sein, das in der Endphase der Befüllung des Behältnisses 8 volläuft. Dadurch kann das flexible Behältnis 8 derart vollständig befüllt werden, daß keine Luft im oberen Bereich verbleibt, sondern über den Entlüftungsanschluß 27 entweicht. Zwischen dem Ausgleichsbehältnis 26 und der Entlüftungsöffnung 27 kann eine Schlauchleitung 28, auch aus einem Klarsichtmaterial, vorgesehen sein, so daß der Abschluß der Befüllung einfach und zweifelsfrei erkennbar ist. Die Pumpeinrichtung 13 kann dann vom Benutzer unmittelbar abgestellt werden. Natürlich ist auch eine Automatisierung dieser Füllstandskontrolle möglich.

Des weiteren können zur Stabilisierung des Laderaums 2 gegen einen nach quer außen gerichteten Druck durch das befüllte Behältnis 8 Ketten oder ähnliche Zugglieder 29 quer zwischen den Außenwandungen gespannt sein.

Zur Befestigung des sackartigen Behältnisses 8 am Laderaumboden kann der Anschlußflansch 15 ein hinreichendes Maß für einen Durchgriff aufweisen, zum Beispiel einen Durchmesser von 150 Millimetern. Des weiteren kann oberhalb des Flansches 15 ein Korb - hier nicht gezeichnet - vorgesehen sein, so daß auch der entleerte Sack 8 sich nicht verschließend auf den Anschlußflansch 15 legen kann. Die Befestigungsmittel des Korbs können an einem oberen Ring des Flansches 15 gehalten sein und zwischen Korb und Flansch 15 das Wandungsmaterials des Behältnisses 8 durchgreifen, um dieses an dem Flansch 15 gedichtet zu sichern. Auch andere Befestigungsschrauben oder ähnliches sind möglich, insbesondere ist deren Lösung per Durchgriff von außen möglich.

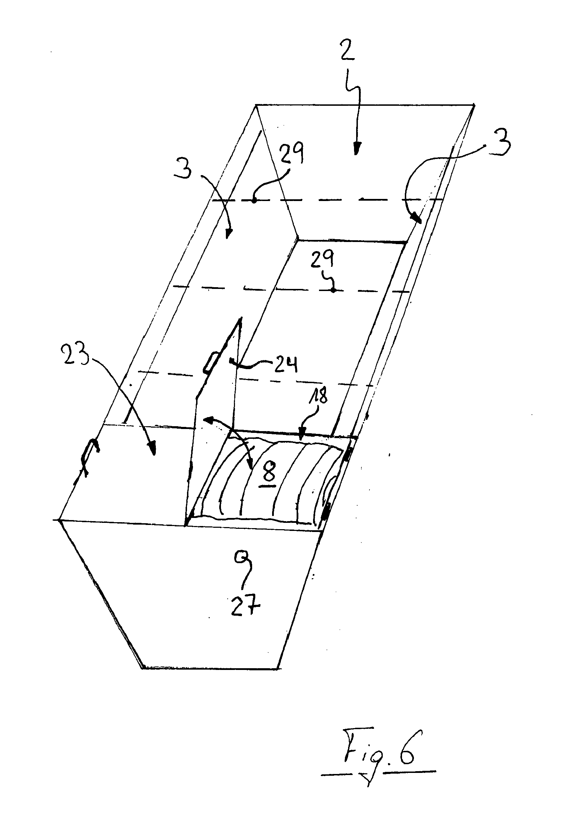

Es versteht sich, daß diese dichte Befestigungsmöglichkeit von außen, die Füllstandkontrolle über Ausgleichbehältnis 26 und Schlauchleitung 28 und die Verriegelungsmittel 25 natürlich auch bei einer Anordnung des Abteils 18 im vorderen Teil des Laderaums 2 (wie in den Figuren 1 bis 6) in prinzipiell gleichartiger Weise möglich sind.

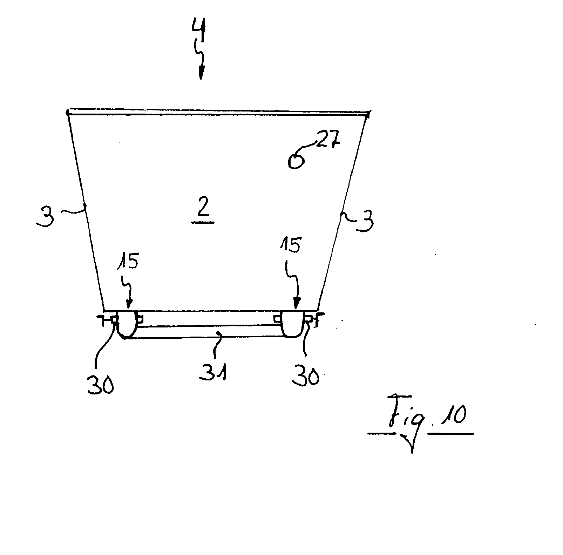

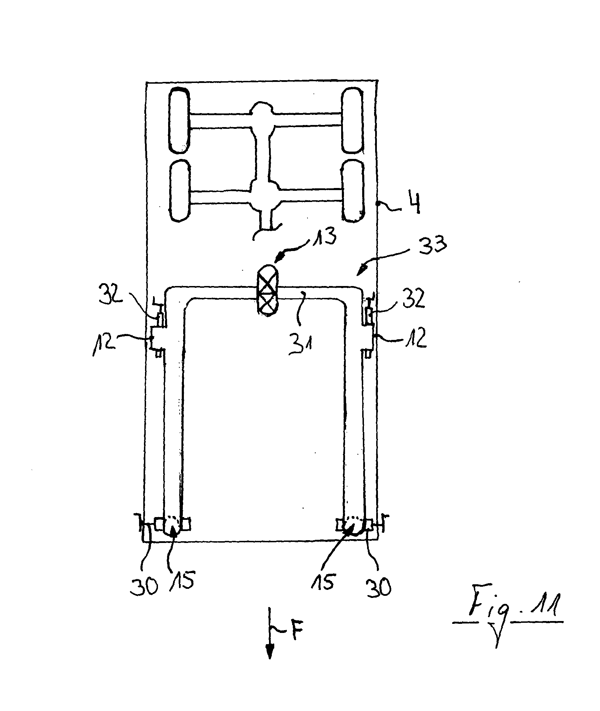

Ebenso ist bei beiden Anordnungen möglich, daß zumindest zwei Öffnungen 15 im Boden des Laderaums 2 und des flexiblen Behältnisses 8 vorgesehen sind, so daß ein Flüssigkeitsumlauf zur Vermeidung von Verstopfungen möglich ist. In den Figuren 10 und 11 ist eine Anordnung des Abteils 18 im bezüglich der Fahrtrichtung F vorderen Bereich gezeigt. Jeder Anschlußflansch 15 kann dabei einzeln mit einem Absperrglied 30, zum Beispiel einem Schieber (Plattenventil) versehen sein. Wenn etwa über einen der Anschlußflansche 15 ausgepumpt wird und sich dort ein Anteil von Feststoffen vor diesem Anschlußflansch 15 sammelt und die Flüssigkeit (zum Beispiel bei Gülle) nicht mehr schnell genug herausgepumpt werden kann, können beide Öffnungen 15 geöffnet werden.

Dabei kann die Pumpeinrichtung 13 (auch zwei separate Pumpen sind möglich) so geschaltet werden, daß jetzt über den anderen Flansch 15 abgesaugt und in den ersten, verstopften Flansch 15 über eine Querleitung 31 eingefördert wird, um diesen freizuspülen. Die äußeren Befüll- und Entleeranschlüsse 12 können in dieser Phase zum Erreichen dieser Querströmung über deren jeweilige Absperrglieder (Schieber) 32 verschlossen werden. Die Querleitung 31 kann Bestandteil einer insgesamt im wesentlichen in Draufsicht U-förmigen Rohrverbindung 33 sein.

Je nach Beschaltung der Pumpeinrichtung 13 kann die Fließrichtung zwischen den Öffnungen 15 gewählt werden.

Hier ist in Figur 11 beispielhaft gezeigt, daß außenseitig an jeder Fahrzeugseite je ein Anschluß 12 für einen Schlauch zur Befüllung oder Entleerung vorgesehen sein kann, so daß der Schlauch dann an jeder Fahrzeugquerseite ohne ein Umrangieren des Fahrzeugs 1 angeschlossen werden kann. Diese Anordnung ist nicht zwingend.

Ein besonderer Vorteil der Erfindung besteht darin, daß das größenvariable Behältnis 8 mitsamt seiner Rolleinrichtung 19 und dem Befüll- und Entleeranschluß 12 an einem Standardtransportfahrzeug 1, beispielsweise einem Kipper, auch nachrüstbar ist, so daß zahlreiche heute fahrende und nur auf einer Fahrt mit Schüttgütern beladene Fahrzeuge nachgerüstet werden können und dann Leerfahrten vermeiden.

### ▪Bezugszeichenliste:

| | | | |
|---|---|---|---|
| 1 | Transportfahrzeug, | 19 | Rolleinrichtung, |
| 2 | Laderaum, | 20 | Drehrichtung der Trommel, |
| 3 | Wandungen, | 21 | Schienensystem, |
| 4 | Kippmulde, | 22 | Schwenkklappe mit Abteil, |
| 5 | Kipprichtung, | 23 | Deckeleinrichtung, |
| 6 | Sattelauflieger, | 24 | Schwenkrichtung, |
| 7 | hintere Schwenkklappe, | 25 | Verriegelungsmittel, |
| 8 | flexibles Behältnis, | 26 | Ausgleichsbehältnis, |
| 9 | oberer Rand, | 27 | Entlüftungsöffnung, |
| 10 | Schürze, | 28 | Schlauchleitung, |
| 11 | Trommel, | 29 | Zugglieder, |
| 12 | Befüll- und Entleeranschluß, | 30 | Absperrglied (Schieber), |
| | | 31 | Querverbindungsrohr, |
| 13 | Pumpeinrichtung, | 32 | Absperrglieder der Befüll- und Entleeranschlüsse, |
| 14 | Leitungsrohr, | | |
| 15 | Anschlußflansch, | 33 | U-förmige Rohrleitung, |
| 16 | Schottwand, | | |
| 17 | Verschiebungspfeil, | F | Fahrtrichtung |
| 18 | Abteil, | | |

## Patentansprüche

1. Transportfahrzeug (1) mit zumindest einem Laderaum (2) zur Aufnahme von trockenen Gütern, insbesondere Massengütern wie Getreide oder anderen landwirtschaftlichen Produkten,
**dadurch gekennzeichnet,**
**daß** dem Laderaum (2) zumindest ein flexibles, größenvariables Behältnis (8) zugeordnet ist, das über zumindest einen außerhalb des Laderaums liegenden Befüll- und Entleeranschluß 12 mit einem Flüssigkeit enthaltenden Stoff befüllbar und/oder entleerbar ist.

2. Transportfahrzeug (1) nach Anspruch 1,
**dadurch gekennzeichnet,**
**daß** das größenvariable Behältnis (8) nach Art eines Sacks und zur Aufnahme von Flüssigkeiten oder nahezu flüssigen Füllungen, wie etwa Gülle, ausgebildet ist.

3. Transportfahrzeug (1) nach einem der Ansprüche 1 oder 2,
**dadurch gekennzeichnet,**
**daß** der Befüll- und Entleeranschluß (12) unterhalb des Laderaums (2) gelegen ist.

4. Transportfahrzeug (1) nach einem der Ansprüche 1 bis 3,
**dadurch gekennzeichnet,**
**daß** das größenvariable Behältnis (8) ein Befüllvolumen von mehr als zwanzig Kubikmetern aufweist.

5. Transportfahrzeug (1) nach einem der Ansprüche 1 bis 4,
**dadurch gekennzeichnet,**
**daß** das größenvariable Behältnis (8) in einem eigenen, größenvariablen Abteil (18) im Laderaum (2) angeordnet ist.

6. Transportfahrzeug (1) nach Anspruch 5,
**dadurch gekennzeichnet,**
**daß** das Abteil (18) von einer längs zum Laderaum (2) beweglichen Schottwand (16) begrenzt ist.

7. Transportfahrzeug (1) nach einem der Ansprüche 5 oder 6,
**dadurch gekennzeichnet,**
**daß** das das Abteil (18) in entleerter Stellung des aufgenommenen Behältnisses (8) von einer beweglichen Deckeleinrichtung (23) abdeckbar ist.

8. Transportfahrzeug (1) nach einem der Ansprüche 6 oder 7,
**dadurch gekennzeichnet,**
**daß** das Fahrzeug (1) einen Walking floor umfaßt, mit dem auch die Schottwand (16) verbunden ist.

9. Transportfahrzeug (1) nach einem der Ansprüche 6 bis 8,
**dadurch gekennzeichnet,**
**daß** die Schottwand (16) in ihrer das Abteil (18) mit dem entleerten flexiblen Behältnis (8) schließenden Stellung über von oben lösbare Verriegelungsmittel (25) sicherbar ist.

10. Transportfahrzeug (1) nach einem der Ansprüche 1 bis 9,
**dadurch gekennzeichnet,**
**daß** das flexible Behältnis (8) an einer dem oberen Bereich des Laderaums angeordneten und längs zum Laderaum beweglichen Rolleinrichtung (19) gehalten und mit deren Hilfe auf einer Trommel (11) auf- oder von dieser abrollbar ist.

11. Transportfahrzeug (1) nach Anspruch 10,
**dadurch gekennzeichnet,**
**daß** das flexible Behältnis (8) beim Aufrollen nach Art einer Tube ausdrückbar ist.

12. Transportfahrzeug (1) nach Anspruch 11,
**dadurch gekennzeichnet,**
**daß** die Rolleinrichtung (19) auf einem dem oberen Bereich des Laderaums (2) zugeordneten Schienensystem (21) verlagerbar ist und bei ihrer Verlagerung die Schottwand (16) mitbewegt.

13. Transportfahrzeug (1) nach einem der Ansprüche 10 bis 12,
**dadurch gekennzeichnet,**
**daß** der Trommel (11) ein motorischer Antrieb, insbesondere ein innenliegender Hydraulikmotor, zugeordnet ist.

14. Transportfahrzeug (1) nach einem der Ansprüche 10 bis 13,
**dadurch gekennzeichnet,**
**daß** der Laderaum (2) eine schwenkbare Kippmulde (4) bildet und das flexible Behältnis (8) sowie der außenliegende Anschluß (12) zum Befüllen und Entleeren und eine zugehörige Pumpeinrichtung (13) mit der Kippmulde (4) schwenkbar ist.

15. Transportfahrzeug (1) nach einem der Ansprüche 1 bis 14,
**dadurch gekennzeichnet,**
**daß** das größenvariable Behältnis (8) mitsamt seiner Rolleinrichtung (19) und dem Befüll- und Entleeranschluß (12) an einem Standardtransportfahrzeug (1), beispielsweise einem Kipper, nachrüstbar ist.

16. Transportfahrzeug (1) nach einem der Ansprüche 1 bis 15,
**dadurch gekennzeichnet,**
**daß** das größenvariable Behältnis (8) im entleerten Zustand mitsamt seiner Rolleinrichtung (19) und dem Befüll- und Entleeranschluß (12) in einer heckseitigen Schwenkklappe (22) eines Kippers (4) angeordnet ist.

17. Transportfahrzeug (1) nach Anspruch 16,
**dadurch gekennzeichnet,**
**daß** die das größenvariable Behältnis (8) mit der Rolleinrichtung (19) und dem Befüll- und Entleeranschluß (12) umfassende Schwenkklappe (22) gegen eine herkömmliche Schwenkklappe (7) austauschbar ist.

18. Transportfahrzeug (1) nach einem der Ansprüche 5 bis 17,
**dadurch gekennzeichnet,**
**daß** im oberen Bereich des Abteils (18) zumindest ein Ausgleichsbehältnis (26) mit einem Entlüftungsanschluß (27) angeordnet ist, das in der Endphase der Befüllung des Behältnisses (8) volläuft.
